(19) Europäisches Patentamt
European Patent Office
Office européen des brevets

(11) EP 1 622 081 A1

(12) EUROPEAN PATENT APPLICATION
published in accordance with Art. 158(3) EPC

(43) Date of publication:
01.02.2006 Bulletin 2006/05

(51) Int Cl.:
G06T 7/00 (1995.01)

(21) Application number: 04727725.6

(22) Date of filing: 15.04.2004

(86) International application number:
PCT/JP2004/005372

(87) International publication number:
WO 2004/095374 (04.11.2004 Gazette 2004/45)

(84) Designated Contracting States:
DE FR GB IT

(30) Priority: 21.04.2003 JP 2003115437

(71) Applicant: NEC CORPORATION
Minato-ku,
Tokyo 108-8001 (JP)

(72) Inventors:
• TAKAHASHI, Yusuke,
c/o NEC Corporation
Tokyo 1088001 (JP)

• HIRATA, Kyoji,
c/o NEC Corporation
Tokyo 1088001 (JP)

(74) Representative: Heunemann, Dieter
Vossius & Partner,
Siebertstrasse 4
81675 München (DE)

(54) VIDEO OBJECT RECOGNITION DEVICE AND RECOGNITION METHOD, VIDEO ANNOTATION GIVING DEVICE AND GIVING METHOD, AND PROGRAM

(57) Visual feature information which is information representing a numerical value of a visual feature of an object and additional information which is information added to the object are stored in association with each other. Partial image data which is image data of a partial area of a video image is extracted. Visual feature information of the extracted partial image data is generated.

The visual feature information of the extracted partial image data and visual feature information of an object which is stored are compared with each other to calculate a similarity therebetween. Based on the calculated similarity, an object contained in the video image data is identified. An annotation made up of additional information of the identified object is displayed in superposing relation to the video image on a display device.

Fig. 1

**Description**

Technical field

The present invention relates to a video image recognizing apparatus for associating a video subject and subject information with each other, a video image annotation applying apparatus, and a vehicle guidance system.

Background art

In recent years, navigation systems for providing the user with information about his/her current location by using a GPS (global positioning system) have been widely used, and are installed in automobiles, etc. These navigation systems have a function for providing the user with information about the surrounding environment relative to his/her current position. The user terminal of the navigation system displays the provided information on a digital map that is plotted by CG (computer graphics) on a monitor or the like.

According to another process for providing the user with information about the surrounding environment relative to his/her current position, this information is displayed as information superimposed on an actual video image according to augmented reality technology.

Non-patent document 1 referred to below discloses a system for displaying information about an object (object's name) that exists within a pre-determined distance from the image capturing position in the image capturing direction and which is superimposed on the actual image of the object, by using the image capturing position where the actual image is captured, the image capturing direction, and positional information including the latitude and longitude of the object (an object such as a building or the like) which is a video subject.

(Non-patent document 1)

Tomohiro Terada, and two others, "Construction of vehicle-mounted annotation system using augmented reality", Technical Report of IEICE, The Institute of Electronics, Information, and Communication Engineers, Feb. 2002, CQ2001-103, MVE2001-136. p. 55 - 60.

However, the system disclosed in the non-patent document 1 displays information about an object that exists within a predetermined distance from the image capturing position in the image capturing direction, regardless of whether the object is captured as a video image or not. Therefore, the system displays the information of the image even if the object is not actually captured as a video image because, for example, it is positioned behind a tree or the like.

Disclosure of the invention

It is an object of the present invention to provide a video image recognizing apparatus, a video image annotation applying apparatus, and a vehicle guidance system which do not display information of an object if the object is not actually captured as a video image.

A video image object recognizing apparatus according to the present invention comprises input means for inputting video image data and image capturing information which is information for determining an area where an image will be captured, storage means for storing positional information which is information representing the position of an object and visual feature information which is information representing a numerical value of a visual feature of the object, that are connected to each other, and object recognizing means for recognizing an object contained in a video image based on the input video image data, wherein the object recognizing means comprises image capturing space estimating means for estimating an area where an image will be captured based on the image capturing information, matching means for matching the area where an image will be captured to a position represented by the positional information of the object stored in the storage means, partial video image extracting means for extracting partial video image data which is either video image data of a partial area of the video image based on the video image data or is video image data of the entire video image, from the input video image, visual feature information setting means for generating visual feature information of the partial video image data, similarity calculating means for comparing the visual feature information of the partial video image data and the visual feature information of the object stored in the storage means with each other to calculate a similarity therebetween, and decision means for determining whether or not an object is present in the video image, based on the input video image data, which is based on the result of matching by said matching means and on the result of the calculated similarity.

A video image annotation applying apparatus according to the present invention comprises input means for inputting video image data and image capturing information which is information for determining an area where an image will be captured, storage means for storing positional information which is information representing the position of an object, visual feature information which is information representing a numerical value of a visual feature of the object, and additional information which is information added to the object, that are associated with each other, and object recognizing means for associating an object contained in a video image based on the input video image data with the additional information, wherein the object recognizing means comprises image capturing space estimating means for estimating an area where an image will be captured based on the image capturing information, matching means for matching the area where an image will be captured to a position represented by the positional information of the object stored in the storage means, partial video image extracting means for extracting partial video image data which is either video image data of a partial area of the video image based on the video image data or is video image data of the entire video image, from the input video image, visual feature information setting means for generating visual feature information of the partial video image data, similarity calculating means for comparing the visual feature information of the partial video image data and the visual feature information of the object stored in the storage means with each other to calculate a similarity therebetween, and decision means for identifying an object which is contained in the video image based on the input video image data, based on the result of the matching by the matching means and the calculated similarity, and for associating the identified object and the additional information stored in the storage means with each other.

The object recognizing means may include presence probability calculating means for calculating a presence probability which is the probability that an object is contained in the video image, based on the area where an image will be captured and the positional information of the object stored in the storage means, and the decision means may identify an object which is contained in the video image based on the calculated presence probability and similarity, and associate the identified object and the additional information stored in the storage means with each other. With this arrangement, an object which is present in the area where an image will be captured, but has a low probability that it is captured as a video image is not associated with additional information. Therefore, when annotations are displayed in superposing relation to a video image, an annotation of an object which is not captured as a video image is prevented from being displayed.

The partial video image extracting means may identify a range within which the object is positioned in the video image based on the positional information of the object stored in the storage means, and extract partial video image data from the identified range. With this arrangement, a range from which to extract partial video image data can be limited thereby to reduce the amount of data processing performed by the partial video image extracting means.

The object recognizing means may include candidate object searching means for extracting a candidate object, which is an object present in the area where an image will be captured, based on the area where an image will be captured and the positional information, and the similarity calculating means may compare the visual feature information of the partial video image data and the visual feature information of a candidate object stored in the storage means with each other to calculate a similarity therebetween. With this arrangement, the number of objects to be compared with the visual feature information of the partial video image data to calculate a similarity can be reduced thereby to reduce the amount of data processing performed by the similarity calculating means.

The partial video image extracting means may identify a range within which the object is positioned in the video image based on the positional information of the candidate object stored in the storage means, and extract partial video image data from the identified range. With this arrangement, it is possible to limit a range from which to extract partial image data thereby to reduce the amount of data processing performed by the partial video image extracting means.

The video image annotation applying apparatus may further comprise display means for displaying a video image, and display position determining means for indicating a position to display the additional information associated with the object contained in the video image and for displaying the additional information that is superimposed on the video image. With this arrangement, a video image and an annotation as additional information can be displayed in association with each other.

The video image annotation applying apparatus may further comprise annotation result storage means for storing the additional information and the object contained in the video image in association with each other. With this arrangement, video image data can be searched for based on an association between stored additional information and an object contained in video image data.

The partial video image extracting means may have a function to arbitrarily change the shape and size of the area of a video image based on the extracted partial video image data. With this arrangement, it is possible to extract partial video image data containing an object regardless of the shape of the object contained in the video image data.

The partial video image extracting means may extract partial video image data in the area of a video image which matches one or a combination of conditions including luminance information, color information, shape information, texture information, and size information. With this arrangement, partial image data can be extracted depending on the visual feature information of objects stored in the storage means.

If the partial video image extracting means extracts partial video image data from a video image which matches a combination of each condition, then the partial video image extracting means may determine the importance of the condition and extract partial video image data based on the result of the matching by the matching means and the visual feature information of the object stored in the storage means. With this arrangement, partial image data can be extracted depending on the visual features of objects stored in the storage means.

The visual feature information of the object stored in the storage means may comprise a template video image which is a video image having a visual feature similar to the object. With this arrangement, the amount of work to be performed for storing visual feature information of an object in the storage means can be reduced.

The visual feature information of the object stored in the storage means may comprise one or more items of color information, shape information, texture information, and size information, and the visual feature information of the partial video image data generated by the visual feature information setting means may comprise one or more items of color information, shape information, texture information, and size information. With this arrangement, the visual feature information setting means may calculate a similarity quantitatively.

The positional information of the object stored in the storage means may comprise information for identifying the position of one of the vertexes, a central point, or a center of gravity of a three-dimensional shape which approximates a three-dimensional shape of solid geometry including a cone, a cylinder, a cube, or the like which is similar to the object. With this arrangement, the amount of the data of positional information can be reduced.

The positional information of the object stored in the storage means may comprise information for identifying the position of at least one of the vertexes of a three-dimensional shape which approximates the object having polygonal surfaces. With this arrangement, the amount of the data of positional information can be reduced.

The positional information of the object stored in the storage means may comprise information for identifying the position of a vertex which is the highest of all the vertexes of the object. With this arrangement, the amount of the data of positional information can be reduced.

The positional information of the object stored in the storage means may comprise information for identifying the position of the object according to a latitude, a longitude, and an altitude. With this arrangement, the data of a position whose positional information is captured using a GPS can be employed.

The storage means may store additional information of an object and visual feature information thereof in a hierarchical pattern with respect to additional information of an object set which is a set of a plurality objects and visual feature information thereof, and the decision means may determine whether a plurality of objects whose images are captured are an object set or not based on the visual feature information of the object set stored in the storage means, and if a plurality of objects whose images are captured are an object set, may associate the additional information of the object set and the object set with each other. With this arrangement, an annotation may be associated with an object set.

The image capturing information may include captured date and time information which is information for identifying a captured date and time, the storage means may store visual feature information depending on the captured date and time, and the similarity calculating means may compare the visual feature information of the partial video image data and the visual feature information depending on the captured date and time identified by the captured date and time information with each other to calculate a similarity therebetween. With this arrangement, a visual feature quantity of an object may represent a bright color in the daytime or a dark color at night. An object which changes in color dependent on the date (e.g., season), such as a mountain, may have a visual feature quantity which may represent white in winter, green in spring and summer, or red or yellow in fall. Thus, the visual feature information of an object may be changed depending on the date. Accordingly, the object recognizing means can recognize an object depending on a change in a visual feature of the object based on the captured date and time.

The partial video image extracting means may divide areas from the input video image data and extracts the divided areas as the partial video image data.

The partial video image extracting means may combine the divided areas into the partial video image data.

The partial video image extracting means may generate the partial video image data by hierarchically evaluating a combination of the divided areas.

The partial video image extracting means may use only a number of areas whose similarity is high for subsequent combination from the combination of areas in hierarchically evaluating the combination of the divided areas.

A plurality of items of visual information of the object as viewed, in part or wholly, in one direction or a plurality of directions may be held as the visual feature information of the object stored in the storage means.

A vehicle guidance system according to the present invention is a vehicle guidance system adapted to be mounted on a vehicle for displaying a position of its own on a map displayed by a display device based on a GPS, the vehicle guidance system comprising a video image annotation applying apparatus as described above.

A method of recognizing a video image object according to the present invention comprises the steps of inputting video image data and image capturing information which is information for determining an area where an image will be captured, storing positional information which is information representing the position of an object and visual feature information which is information representing a numerical value of a visual feature of the object, in association with each other, estimating an area where an image will be captured based on the image capturing information, matching the area where an image will be captured to a position represented by the positional information of the object which is stored, extracting partial video image data which is either video image data of a partial area of the video image based on the video image data or is video image data of the entire video image, from the input video image, generating visual feature information of the partial video image data, comparing the visual feature information of the partial video image data and the stored visual feature information of the object to calculate a similarity therebetween, and determining whether an image of an object is captured or not, based on the result of the matching and the calculated similarity.

A method of applying an video image annotation according to the present invention comprises the steps of inputting video image data and image capturing information which is information for determining an area where an image will be captured, storing positional information which is information representing the position of an object, visual feature information which is information representing a numerical value of a visual feature of the object, and additional information which is information added to the object, in association with each other, estimating an area where an image will be captured based on the image capturing information, matching the area where an image will be captured to a position represented by the positional information of the object which is stored, extracting partial video image data which is either video image data of a partial area of the video image based on the video image data or is video image data of the entire video image, from the input video image, generating visual feature information of the partial video image data, comparing the visual feature information of the partial video image data and the stored visual feature information of the object to calculate a similarity therebetween, and identifying an object which is contained in the video image, based on the result of the matching and the calculated similarity, and associating the identified object and the stored additional information with each other.

A video image object recognizing program according to the present invention is adapted to be installed in a video image object recognizing apparatus for determining whether an object which is stored is contained as a subject in video image data or not, the video image object recognizing program to enable a computer to perform a process comprising the steps of storing, in a storage device, positional information which is information representing the position of an object and visual feature information which is information representing a numerical value of a visual feature of the object, in association with each other, estimating an area where an image will be captured based on image capturing information which is information for determining an area where an image will be captured, matching the area where an image will be captured to a position represented by the positional information of the object which is stored in the storage device, extracting partial video image data which is either video image data of a partial area of the video image based on the video image data or is video image data of the entire video image, from input video image, generating visual feature information of the partial video image data, comparing the visual feature information of the partial video image data and the visual feature information of the object which is stored with each other to calculate a similarity therebetween, and determining whether an image of an object is captured or not, based on the result of the matching and the calculated similarity.

A video image annotation applying program according to the present invention is adapted to be installed in a video image annotation applying apparatus for associating an object and information of an object which is stored with each other, the video image annotation applying program enabling a computer to perform a process comprising the steps of storing, in a storage device, positional information which is information representing the position of an object, visual feature information which is information representing a numerical value of a visual feature of the object, and additional information which is information added to the object, in association with each other, estimating an area where an image will be captured based on image capturing information which is information for determining an area where an image will be captured, matching the area where an image will be captured to a position represented by the positional information of the object which is stored in the storage device, extracting partial video image data which is either video image data of a partial area of the video image based on the video image data or is video image data of the entire video image, from input video image, generating visual feature information of the partial video image data, comparing the visual feature information of the partial video image data and the stored visual feature information of the object to calculate a similarity therebetween, and identifying an object which is contained in the video image, based on the result of the matching and the calculated similarity, and associating the identified object and the additional information which is stored with each other.

According to the present invention, it is possible to determine whether an object is captured as a video image or not by comparing visual feature information of the object and visual feature information of partial video image data with each other. If it is judged that an object is captured as a video image, then the object and additional information are associated with each other. If an object is not actually captured as a video image, then information of the object may not be displayed.

The vehicle guidance system according to the present invention has the function of the video image annotation applying apparatus according to the present invention. Therefore, the vehicle guidance system may not display information of an object if the object is not actually captured as a video image.

BRIEF DESCRIPTION OF THE DRAWINGS

Fig. 1 is a block diagram of an arrangement according to an embodiment of the present invention;

Fig. 2 is a diagram showing an example of meaning information, positional information, and visual feature quantities;

Fig. 3 is a block diagram of an arrangement according to a first embodiment of the present invention;

Fig. 4 is a block diagram of a visual feature quantity comparing means according to the first embodiment of the present invention;

Fig. 5 is a flowchart of operation of the first embodiment of the present invention;

Fig. 6 is a view showing an area where an image will be captured represented in side elevation;

Fig. 7 is a view showing an area where an image will be captured represented on information;

Fig. 8 is a view which illustrates an area where an image will be captured;

Fig. 9 is a view showing an example of the relationship between an image capturing position and a representative point on a candidate object;

Fig. 10 is a view showing template images;

Fig. 11 is a view showing an image processed by raster scan in its entirety;

Fig. 12 is a view showing a candidate object positioned on a right side of an area where an image will be captured;

Fig. 13 is a view showing an image whose right half is processed by raster scan in its entirety;

Fig. 14 is a view showing the manner in which a video image is divided into areas;

Fig. 15 is a view showing divided areas and joined areas;

Fig. 16 is a view showing an image divided into areas;

Fig. 17 is a view showing an image whose areas are reduced in number;

Fig. 18 is a view showing the manner in which a partial image and candidate objects are compared with each other;

Fig. 19 is a view showing a set of geographical objects;

Fig. 20 is a diagram illustrative of hierarchical meaning information;

Fig. 21 is a view showing a geographical object as viewed in plan and perspective;

Fig. 22 is a view showing a geographical object divided into parts;

Fig. 23 is a block diagram of an arrangement according to a second embodiment of the present invention;

Fig. 24 is a block diagram of a visual feature quantity comparing means according to the first embodiment of the present invention;

Fig. 25 is a block diagram of an arrangement according to a third embodiment of the present invention;

Fig. 26 is a view showing an example of a video image with annotations applied thereto;

Fig. 27 is a block diagram of an arrangement according to a fourth embodiment of the present invention;

Fig. 28 is a block diagram of a visual feature quantity comparing means according to a fifth embodiment of the present invention;

Fig. 29 is a flowchart of operation of the fifth embodiment of the present invention; and

Fig. 30 is a diagram illustrative of a hierarchical combinatorial evaluating process.

## BEST MODE FOR CARRYING OUT THE INVENTION

(First embodiment of the invention)

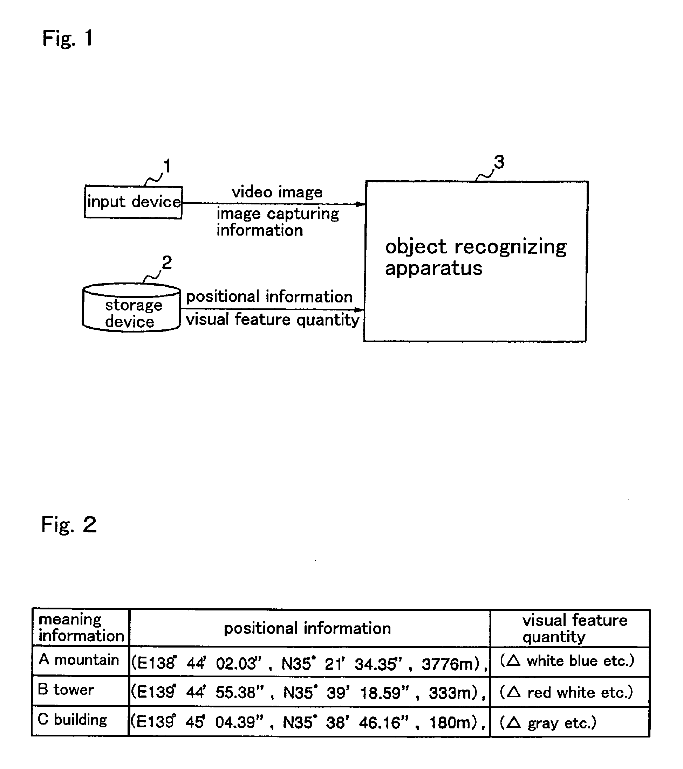

Fig. 1 is a block diagram of a first embodiment of the present invention. An arrangement of the first embodiment will be described below. The first embodiment of the present invention includes input device 1 for inputting a video image and image capturing information which is information of situations wherein the video image is captured, storage device 2 for storing information of an object which is a video image subject, and object recognizing apparatus 3 for determining whether an object is captured as a video image or not.

Input device 1 inputs a video image that is output from a video input unit (not shown) for capturing video images, such as a CCD digital camera device, a video camera device, or the like. Input device 1 inputs angle-of-view information representing an angle of view output from the video input unit when a video image is captured. If the zoom ratio of the video input unit cannot be changed, then angle-of-view information is generated by calculating an angle of view from the focal length of the lens and the size of the CCD in advance. If the zoom ratio of the video input unit can be changed by a zooming action thereof, then angle-of-view information is generated by acquiring in advance information representing the relationship between zooming action quantities and angles of view and calculating an angle of view depending on a zooming action quantity produced when a video image is captured.

Input device 1 is connected to a GPS device for measuring the latitude, longitude, and altitude of input device 1, and identifies an image capturing position and a moving speed. Input device 1 may be connected to an acceleration sensor device, and may identify a moving speed by integrating an output from the acceleration sensor device with respect to time. Input device 1 is also connected to a magnetic compass device, an electronic compass device, or a gyrocompass device, which identifies a direction in which the video input unit captures a video image.

If the video input unit has panning and tilting functions, then input device 1 measures a panning or tilting action quantity, and corrects the image capturing direction that is identified by the magnetic compass device, the electronic compass device, or the gyrocompass device. When the video input unit moves while it is capturing a video image, input device 1 identifies the direction in which the video input unit moves, using the path data of the GPS device and the output from the magnetic compass device, the electronic compass device, or the gyrocompass device. The image capturing information includes angle-of-view information, captured date and time information which is information for identifying the date and time on which a video image is captured, information of the image capturing position, information of the image capturing direction, information of the moving direction, and information of the moving speed.

Storage device 2 stores additional information (e.g., meaning information) and visual feature information (e.g., visual feature quantity) of objects. The meaning information is information on objects, e.g., names, histories, usage charges, business hours, addresses, telephone numbers, URLs, etc., of the objects. Applying meaning information to an object in a video image is referred to as applying an annotation. Specifically, an annotation image is added near an object in a video image.

A visual feature quantity is a numerical quantity representing a feature for visually recognizing an object, such as a shape, a size, a texture, an edge, a color, or the like. For example, a visual feature is a feature quantity vector defined using either one of combinations of features of color, texture, and shape covered by visual descriptors defined by to MPEG-7/Visual, as disclosed in Akio Yamada, "Contents description based on visual tools", the journal of The Institute of Image Information and Television Engineers, The Institute of Image Information and Television Engineers, Nov. 1, 2002, Vol. 56, No. 11, p. 1711 - 1714 (hereinafter referred to as document A). The feature of color is represented by a dominant color and a color layout. The feature of texture is represented by an edge histogram. The feature of shape is represented by a region-based shape descriptor or the like.

The dominant color is an RGB representation of most frequency color with frequency. The color layout is a spatial distribution of color on the frequency axis. The edge histogram represents how many of each of vertical, horizontal, oblique, and other edges are present in the form of a histogram. The region-based shape descriptor is a descriptor of 35 two-dimensional ART (angular radial transform) coefficients of binary shape data.

The visual feature quantity $FOi$ of an object $Oci$ is described as a vector representation $FOi$ = (dominant color, color layout, edge histogram, region-based shape descriptor, ...).

Storage device 2 may store a plurality of visual feature quantities of one image depending on the date and time on which a video image of the object is captured. For example, a visual feature quantity of an object may represent a bright color in the daytime or a dark color at night. An object which changes in color dependent on the date (e.g., season), such as a mountain, has a visual feature quantity which may represent white in winter, green in spring and summer, or red or yellow in fall.

If an object can be identified by positional information representing the latitude, longitude, etc., e.g., a building or an artificial structure such as a bridge, a tower, or the like, or a natural landscape such as a mountain, a lake, or the like, then storage device 2 stores the positional information of the object. An object that can be identified by positional information will hereinafter referred to as a geographical object. An object that moves with time, such as a train or the like, cannot be identified by positional information only. However, if the position of such an object can be identified at each time by a diagram or the like, then the object may be identified by a combinatorial set representing a combination of time and positional information.

The information of a position used as positional information may be represented by the latitude and longitude of a center or a center of gravity of a geographical object, or a group of latitude, longitude, and altitude data representing the position of each of the vertexes of a three-dimensional shape which is representative of a geographical object using polygonal surfaces. If such a group of data representing the position of each of the vertexes of a three-dimensional shape are used, then the amount of data involved is large. Therefore, the positional information of one or more of the vertexes of the three-dimensional shape may be extracted for use. Alternatively, the shape of a geographical object may be approximated by a conical shape, a cylindrical shape, a cubic shape, etc., and the positional information of the center, the center of gravity, or the vertexes of the approximate shape may be used, or the positional information of one of the vertexes may be extracted for use. For example, the Tokyo tower may be approximated by a pyramid, and the positional information of the five vertexes may be used as the positional information of the geographical object. The positional information of a highest point, which is the vertex at the highest altitude, of an object, may be used as the positional information of the geographical object. Since the highest point is considered less concealable than the other vertexes by the presence of another object when a video image of the object is captured, it is preferable to use the highest point of the object as the positional information of the geographical object.

An example of meaning information, positional information represented by the latitudes and longitudes of highest points, and visual features is shown in Fig. 2. Though the visual feature quantities are actually available as numerical values, they are indicated by graphic shapes and characters for the sake of brevity.

Storage device 2 stores information as a plurality of divided pieces or in a lump in a recording medium such as a CD-ROM, a DVR-R, a hard disk, a memory, or the like. The stored information is read from a single medium or a plurality of mediums by a reading device. Storage device 2 may acquire information through a computer network such as the Internet or the like.

Object recognizing apparatus 3 is implemented by a computer, and calculates the similarity between a visual feature quantity of a video image, in part or wholly, captured by input device 1 and the visual feature quantities of geographical objects which are stored in storage device 2.

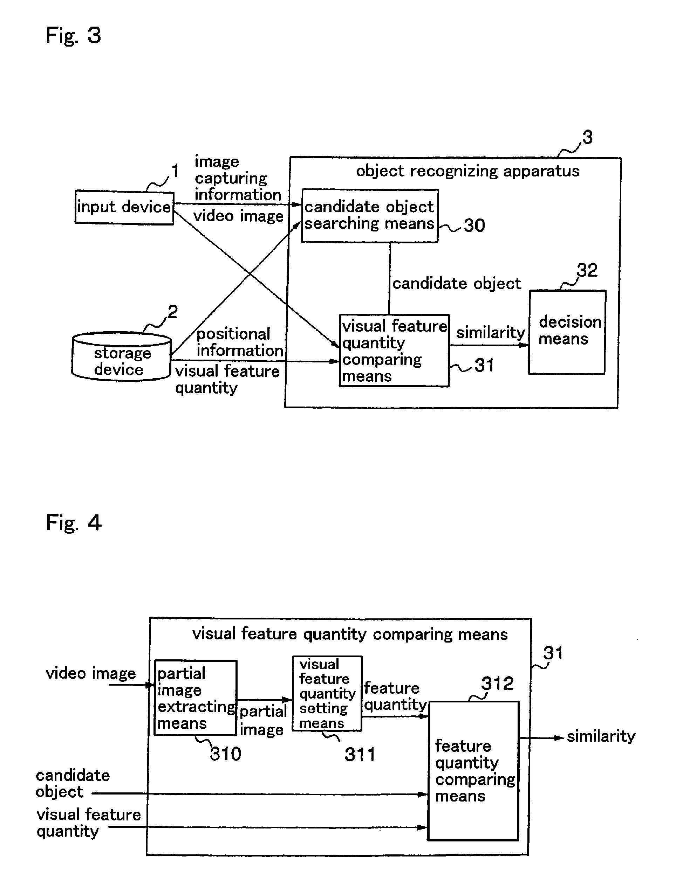

Fig. 3 shows an arrangement of object recognizing apparatus 3 according to the first embodiment of the present invention. The arrangement of object recognizing apparatus 3 will be described below. Means shown in Figs. 3 and 4 are realized by a program.

Object recognizing apparatus 3 comprises an area where an image will be captured estimating means, a matching means, and a candidate object searching means (either of which is realized as candidate object searching means 30, for example) for extracting a candidate object that is a geographical object whose image has possibly been captured, based on image capturing information and positional information of the geographical object, a similarity calculating means (which is realized as visual feature quantity comparing means 31, for example) for calculating the similarity between a visual feature quantity of a candidate object extracted by candidate object searching means 30 and a visual feature quantity of a video image, in part or wholly, captured by input device 1, and decision means 32 for comparing the calculated similarity and a predetermined threshold value to determine whether an image of an object is captured or not.

Fig. 4 shows an arrangement of visual feature quantity comparing means 31. The arrangement of visual feature quantity comparing means 31 will be described below. Visual feature quantity comparing means 31 comprises partial image extracting means 310 for extracting a partial video image which is a video image, in part or wholly, captured by input device 1, visual feature quantity setting means 311 for setting a visual feature quantity of an extracted partial video image, and feature quantity comparing means 312 for calculating a similarity between the visual feature quantities of candidate objects stored in storage device 2 and a visual feature quantity of a partial video image. A visual feature information setting means is realized by visual feature quantity setting means 311.

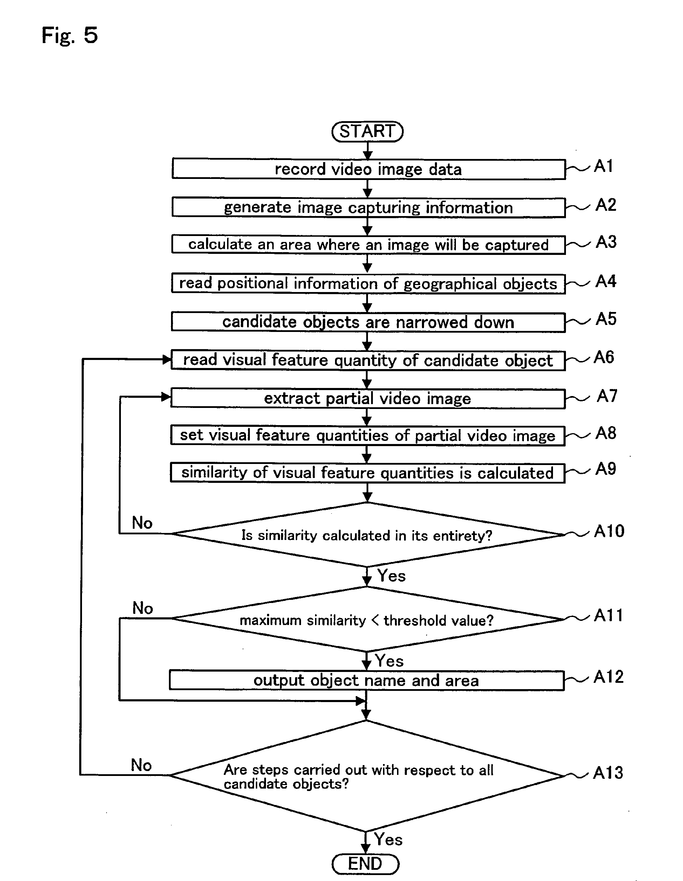

Operation will be described below with reference to a flowchart shown in Fig. 5. First, the video input unit captures a video image, and inputs video image data representing the video image to input device 1. Input device 1 records the input video image data on a video image recording medium (step A1). Input device 1 inputs information as to the image capturing position, the image capturing direction, the moving direction, and the moving speed, and angle-of-view information, combines the input information to generate image capturing information (step A2), and records the generated image capturing information on the video image recording medium on which the video image data is recorded. If each of the frames of the video image data is compressed by JPEG, then the image capturing information is recorded in the header of the image data or the image data and the image capturing information are associated with time, so that the image data and the image capturing information are associated with each other in one-to-one correspondence.

General image capturing devices such as video camera devices record 30 frames of image data per second. However, positional information representing latitudes and longitudes acquired using the GPS function is obtained about once per second. Therefore, it is preferable to correct finally acquired positional information representing latitudes and longitudes, using the information of the moving direction and the moving speed contained in the image capturing information, and to associate the corrected positional information and the video image data with each other in one-to-one correspondence.

Based on the image capturing information generated by input device 1, candidate object searching means 30 calculates an area where an image will be captured that represents a range in which the video input unit is capable of capturing images (step A3).

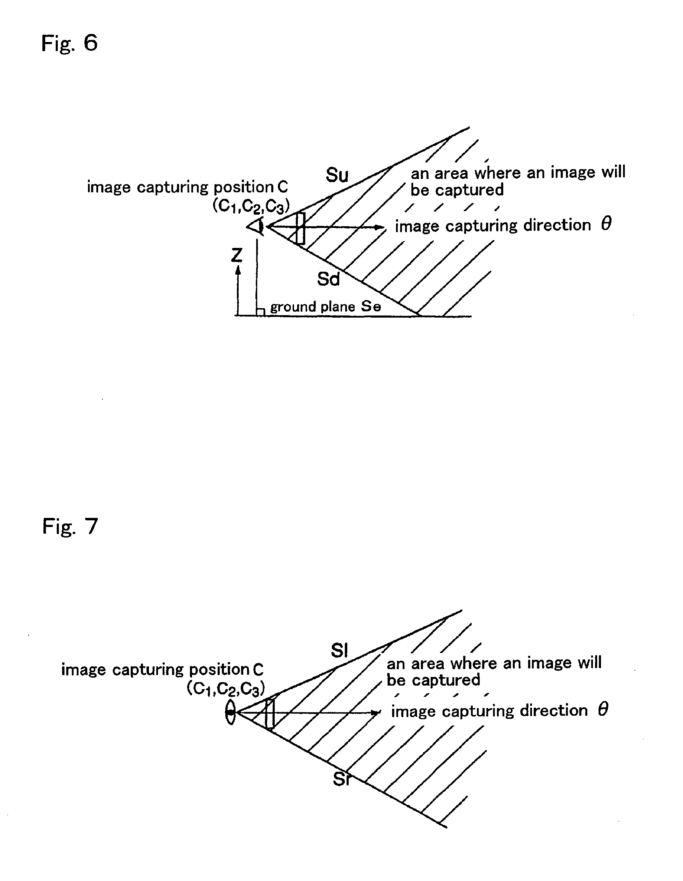

The area where an image will be captured will be described below on the assumption that the image capturing position is represented by C, the image capturing direction by θ, a representative point of a geographical object by O, and the latitude, longitude, and altitude of the geographical object by Oi1, Oi2, Oi3, respectively. As shown in Figs. 6 and 7, the area where an image will be captured is a space extending from the image capturing position in the image capturing direction and surrounded by the angle of view and the ground plane.

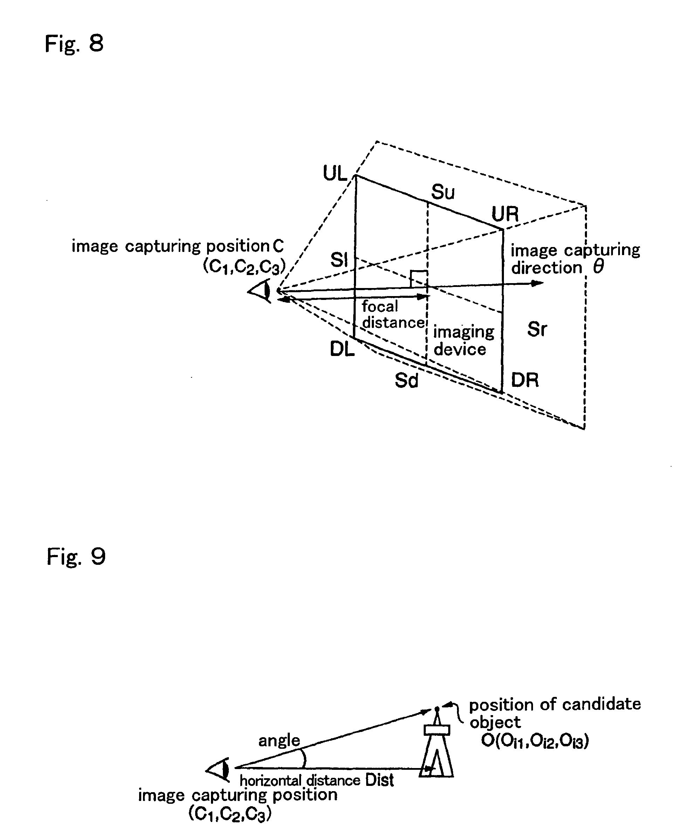

As shown in Fig. 8, it is assumed that the image capturing position is represented by C, the imaging device has upper right, upper left, lower right, and lower left ends UR, UL, DR, DL, a plane including C, UR, UL by Su, a plane including C, UR, DR by Sr, a plane including C, DR, DL by Sd, a plane including C, UL, DL by SI, and the ground plane by Se. These planes are expressed by the equations (1) shown below. The image capturing direction 6 is 0 if it is a direction pointing at north parallel to the ground plane. The equations (1) represent the planes Su, Sd, Sr, SI, Se in an orthogonal coordinate system whose origin is located at a given position on the ground plane.

$$\begin{cases} S_u : f_{su}(x, y, z)=0 \\ S_d : f_{sd}(x, y, z)=0 \\ S_r : f_{sr}(x, y, z)=0 \\ S_l : f_{sl}(x, y, z)=0 \\ S_e : f_{se}(x, y, z)=0 \end{cases}$$

$$\cdots(1)$$

For the sake of brevity, the area where an image will be captured with an angle of view being equal to or smaller than 180 degrees will be described below. The area where an image will be captured is limited to a space sandwiched by Su, Sd, Sr, SL, lying above the ground plane Se, and kept within 90 degrees or less from the image capturing direction θ. Therefore the area where an image will be captured can be expressed as a space satisfying the equations (2). In the equations (2), Cx, Cy, Cz represent positional information of the image capturing position C whose latitude C1, longitude C2, and altitude C3 are converted into values in the orthogonal coordinate system, θx an angle formed between θ and a latitudinal line, θy an angle formed between θ and a longitudinal line, and θz an angle formed between θ and a line normal the ground plane.

$$\begin{cases} f_{su}(x, y, z)f_{sd}(x, y, z) \leq 0 \\ f_{sr}(x, y, z)f_{sl}(x, y, z) \leq 0 \\ f_{se}(x, y, z) \geq 0 \\ \begin{pmatrix} \theta_x \\ \theta_y \\ \theta_z \end{pmatrix} \bullet \begin{pmatrix} x-Cx \\ y-Cy \\ z-Cz \end{pmatrix} > 0 \end{cases}$$

$$\cdots(2)$$

Then, candidate object searching means 30 of object recognizing apparatus 3 reads the positional information of the geographical objects stored in storage device 2 (step A4). Using the read positional information of the geographical objects, candidate object searching means 30 searches for geographical objects that have possibly been imaged by the video input unit. The geographical objects that have possibly been imaged by the video input unit are geographical objects having the positional information satisfying the equations (2). Candidate object searching means 30 extracts geographical objects having the positional information satisfying the equations (2) as candidate objects. That is, candidate object searching means 30 performs matching between the area where an image will be captured and positions represented by the positional information of the geographical objects stored in storage device 2.

Images of those geographical objects which satisfy the equations (2), but exist far away from the image capturing position are hard to capture. Therefore, if the distance between the image capturing position and a geographical object, which has been calculated based on the information of the image capturing position and the positional information of the geographical object, is greater than a predetermined threshold value Th1, then candidate object searching means 30 may not extract the geographical object. However, an image of a geographical object which can be seen from a distant position, such as a mountain or the like, may possibly be captured even if the distance between the geographical object and the image capturing position is large. Therefore, as shown in Fig. 9, an angle of elevation of the top of a geographical object as viewed from the image capturing position may be determined, and if the determined angle of elevation is in excess of a predetermined threshold value Th2, then candidate object searching means 30 may extract the geographical object.

Furthermore, an image of a geographical object is also hard to capture if the difference between the image capturing direction θ and the direction oriented from the image capturing position to the geographical object is large. Consequently, the number of candidate objects can be reduced if candidate objects are extracted under the conditions that the horizontal distance Dist from the image capturing position C to a geographical object is equal to or smaller than a threshold value Th1, the angle of elevation of the top of a geographical object as viewed from the image capturing position is equal to or smaller than a threshold value Th2, and a horizontal angle error which is represented by the difference between the image capturing direction □ and the direction oriented from the image capturing position to a geographical object is equal to or smaller than a threshold value Th3. Using Th1, Th2, Th3, the conditions to be satisfied by candidate objects are represented by equations (3) below. In the equations (3), Oix, Oiy, Oiz represent positional information of the representative point O of the geographical object whose latitude Oi1, longitude Oi2, and altitude Oi3 are converted into values in the orthogonal coordinate system. In the present embodiment, candidate objects are further narrowed down according to the equations (3) (step A5).

$$\begin{cases} Dist = \sqrt{(Cx-Oix)^2 + (Cy-Oiy)^2} \leq Th1 \\ \left| \theta - \tan^{-1}\left(\dfrac{Cx-Oix}{Cy-Oiy}\right) \right| \leq Th2 \\ \left| \tan^{-1}\left(\dfrac{Oiz-Cz}{Dist}\right) \right| \geq Th3 \end{cases}$$

$$\cdots (3)$$

M candidate objects which satisfy the conditions represented by the equations (2) and (3) will be described as candidate objects Oci (i = 1 through M). When candidate object searching means 30 extracts a candidate object Oci, candidate object searching means 30 outputs information that specifies the extracted candidate object Oci to visual feature quantity comparing means 31.

Visual feature quantity comparing means 31 reads the visual feature quantity FOi of the candidate object Oci which has been stored in storage device 2 (step A6). Storage device 2 stores the visual feature quantities FOi of the candidate objects Oci as a vector representation FOi = (dominant color, color layout, edge histogram, region-based shape descriptor, ...).

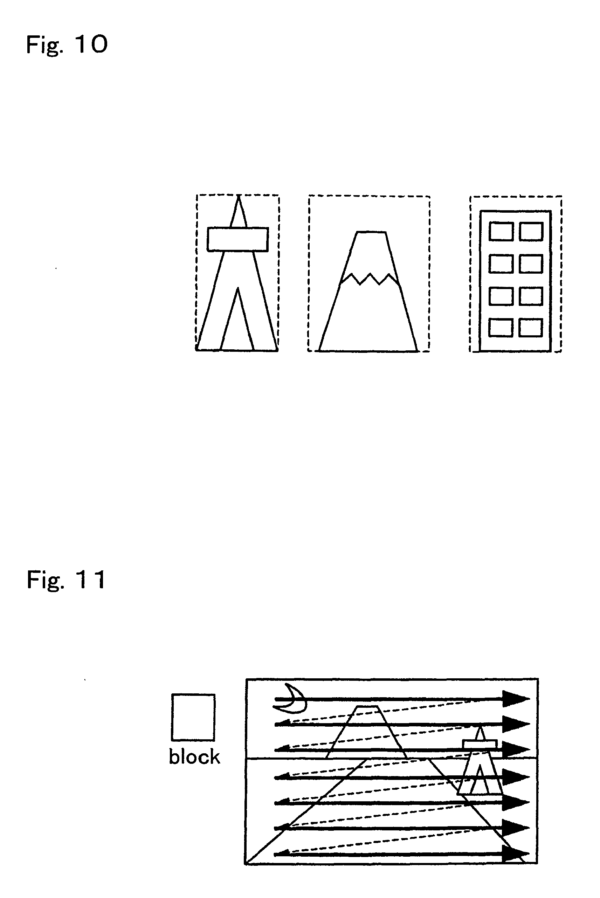

Alternatively, a template image having a visual feature similar to an object may be used as a visual feature quantity. Template images are video images of objects having general shapes, which have been prepared in advance, as shown in Fig. 10, for example. Storage device 2 may store such template images as visual feature quantities.

Partial image extracting means 310 extracts partial video image data (hereinafter referred to as partial video image) representing a video image extracted from a video image, in part or wholly, captured by input device 1 (step A7). According to one process of extracting a partial video image, as shown in Fig. 11, an elongate rectangular block is processed under raster scan from an upper left corner to a lower right corner to extract a video image in the block. If the size of the block is changed based on a visual feature quantity of a candidate object or according to user's instructions, then partial video images having various sizes can be extracted. The block is not limited to an elongate rectangular shape, but may be of a square shape, a circular shape, an elliptical shape, or the like.

Partial image extracting means 310 may read the positional information of candidate objects and the information of the image capturing direction contained in the image capturing information, and may estimate whether the position of each of the candidate objects Oci is on the right side, left side, or center with respect to the image capturing direction. A range to be processed under raster scan for extracting a partial video image may not over the entire video image, but may be limited to a right half, a left half, a right quarter, a left quarter, or a central area of the video image for thereby reducing the amount of processing to be performed by partial image extracting means 310 for extracting a partial video image.

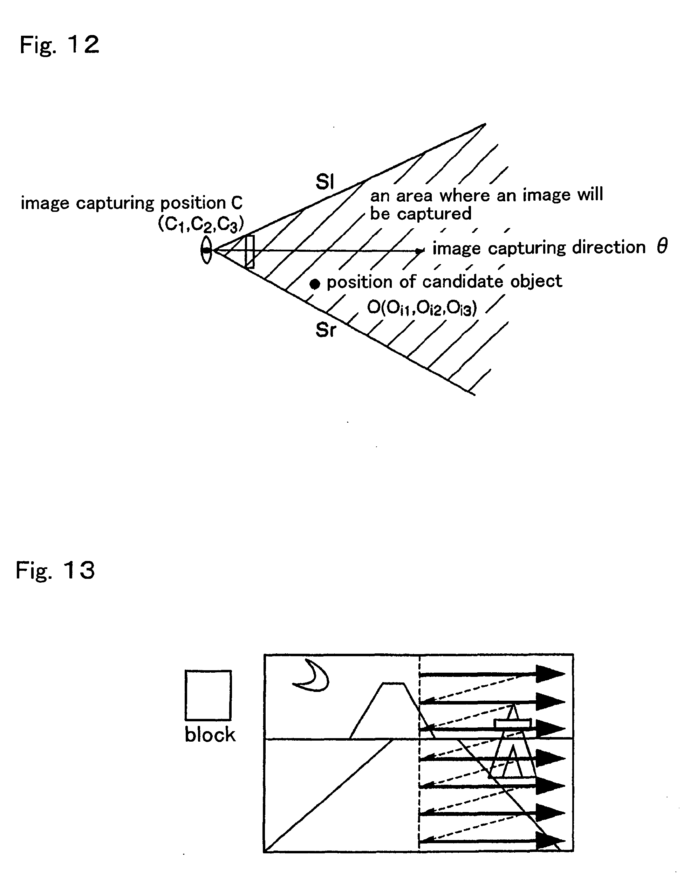

Fig. 12 shows a candidate object positioned on a right side of an area where an image will be captured. A range in which a candidate object is possibly positioned within a video image is limited to a right side of the video image. As shown in Fig. 13, therefore, the range for extracting a partial video image may be limited to the right side of the video image. Similarly, a range in which a candidate object is possibly positioned within a video image may be limited to an upper or lower side of the video image, and the range for extract-ing a partial video image may be limited to the upper or lower side of the video image. Furthermore, the range of a partial video image to be extracted may be limited depending on the distance between the candidate object and the image capturing position, the size of the candidate object, etc.

A process of extracting a partial video image using segmentation may be employed. The segmentation refers to a process of dividing a video image into several areas based on an analysis of colors, edges, boundary complexities, etc. of pixels and regions.

The segmentation is performed according to the process described in "On segmentation for object image retrieval", Hirata, K.; Kasutani, E.; Hara, Y., Pattern Recognition, 2002, Proceedings, 16th International Conference, on Volume 3, P. 1031 - 1034.

According to the segmentation, regions each made up of a cluster of adjacent pixels having the same color are generated. Then, regions that are positioned adjacent to each other across complex boundaries and having similar colors are joined.

Regions that are close to each other and have similar colors and textures are joined. Then, regions that have complex boundaries, are close to each other, and have similar colors and textures are joined. Finally, smaller regions that are dotted around larger regions are joined to the larger regions.

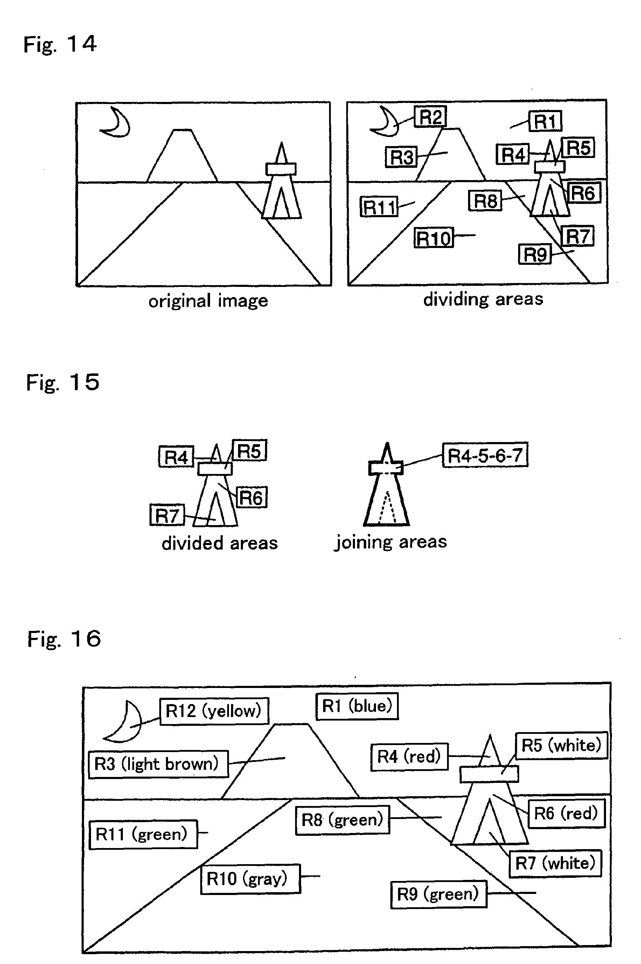

Fig. 14 shows the manner in which a video image is divided into areas. A process of dividing a video image into areas and extracting areas will be described in specific detail below. It is assumed in Fig. 14 that an area to be extracted is a B tower positioned on the right side of the video image.

First, the video image is divided into areas based on colors and edges according to a segmentation process. The B tower as divided into areas is shown on the left side in Fig. 15. The divided areas are represented by Ri (i = 1 through p). It can be seen that the B tower is divided into areas R4 through R7. Then, the divided areas are joined according to the segmentation process. The joined areas of the B tower is shown on the right side in Fig. 15. If an area produced by joining areas Ri, Rj is represented by Ri-j, then the joined areas of the B tower are represented by R4-5-6-7, indicating that the areas of the B tower are joined.

The generation of the area Ri-j by joining the areas Ri, Rj is repeated. A partial video image is produced by joining a plurality of combined areas and extracting the joined areas.

For effectively dividing and joining areas, the process of dividing areas and the process of joining areas may be changed from candidate object to candidate object. Changing the process of dividing areas and the process of joining areas using visual feature quantities of candidate objects will be described below with respect to a video image shown in Fig. 16. As indicated the column of the B tower in Fig. 2, the edge histogram of the visual feature quantities of the B tower indicates that oblique elements are large and "red" and "white" elements are strong for dominant color.

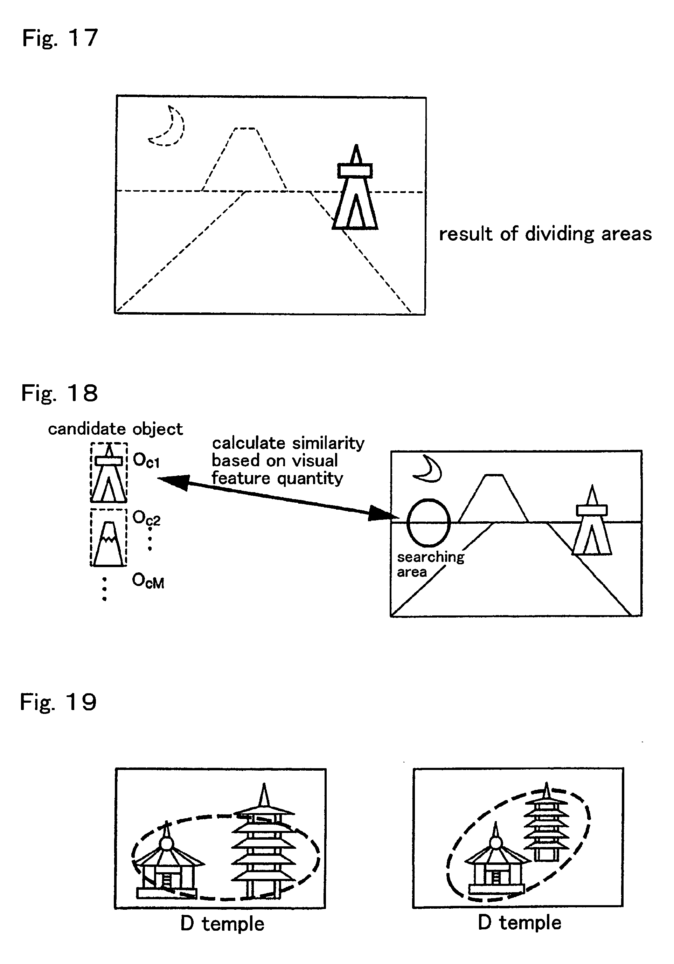

Areas are divided by changing parameters of partial image extracting means 310 for increased sensitivity to boundary lines of oblique edges, red areas, and white areas. The areas are now divided as shown in Fig. 17. In Fig. 17, solid lines represent boundary lines of the divided areas. By thus dividing and joining areas, the number of areas can be reduced, and the number of extracted partial video images can be reduced. Partial image extracting means 310 may extract a partial video image in a video image area which matches one or a combination of luminance information, color information, shape information, texture information, size information, etc., for example, depending on the visual feature quantities of an candidate object.

Partial image extracting means 310 outputs the extracted partial video image to visual feature quantity setting means 311. Visual feature quantity setting means 311 calculates visual feature quantities of the partial video image extracted by partial image extracting means 310 according to any of various known processes, e.g., the process described in the document A, and sets the calculated visual feature quantities (step A8). Visual feature quantity setting means 311 then outputs the set visual feature quantities to feature quantity comparing means 312.

Feature quantity comparing means 312 calculates a similarity MSi between the visual feature quantity FOi of the candidate object and the visual feature quantity Fr of the partial video image. Fig. 18 shows an example of comparison between the partial video image and the candidate object. The visual feature quantity FOi of an object Oci is represented as FOi = (dominant color, color layout, edge histogram, region-based shape descriptor, ...). The visual feature quantity Fr of a partial video image is represented as Fr = (dominant color, color layout, edge histogram, region-based shape descriptor, ...). A similarity vector Si is represented as Si = (similarity of dominant color, similarity of color layout, similarity of edge histogram, similarity of region-based shape descriptor, ···).

The similarity of dominant color is calculated in view of a correlation between the representative color of the candidate object and the representative color of the partial video image. The similarity of color layout is an L2 norm sum calculated by introducing weights that reflect the visual characteristics of each color component and each frequency component into a luminance component coefficient and a color difference component coefficient. The similarity of edge histogram is a differential absolute sum of five edge elements, for example, in a histogram of the candidate object and a histogram of the partial video image. The similarity of region-based shape descriptor is a differential absolute sum of the partial video image and the candidate object which is calculated for each of the elements that make up the descriptor.

The similarity MSi is expressed and calculated according to the equation (4) (step A9)

$$Msi = |Si|$$

$$\cdots(4)$$

Each of the similarities as components of the similarity vector Si shall be normalized such that it is set to 1 or smaller when it is 0 or greater.

A process of calculating a similarity when visual feature quantity comparing means 31 uses a template video image as a visual feature quantity will be described below. If it is assumed that a template video image is represented by Toi(x,y), a video image by F(x,y), and the area of the template video image by SF, then a similarity MSi(X,Y) is expressed and calculated according to the equation (5).

$$Msi(X, Y) = \sum_{x, y} \frac{|F(X+x, Y+y) - Toi(x, y)|}{SF}$$

$$\cdots(5)$$

If the range of a template video image is represented by $0 \leq x \leq 29$ and $0 \leq y \leq 49$, for example, then the equation (5) indicates the similarity between a video image in the range of the template video image from a certain point (X, Y) on the video image and the template video image.

The above similarity is calculated with respect to the video image in its entirety or all partial video images extracted by partial image extracting means 310, and the calculated similarity is output to decision means 32. The entire video image and the partial video image are related to each other such that their visual similarity is greater as the numerical value of the calculated similarity is smaller. The smallest numerical value of the calculated similarity will hereinafter be referred to as maximum similarity.

Decision means 32 extracts a maximum similarity MSmaxi with respect to a candidate object, and determines whether the maximum similarity MSmaxi is smaller than a predetermined threshold value Thi or not (step A11).

If the maximum similarity MSmaxi is smaller than the threshold value Thi, then decision means 32 judges that a candidate object is present in the video image, reads a partial image which contains a geographical object as a candidate object and the meaning information of the candidate object from storage device 2, and outputs them in association with each other (step A12). That is, decision means 32 applies an annotation to the video image. Decision means 32 outputs the annotated video image to a display device such as a liquid crystal display device or the like or a storage device such as a hard disk drive, a memory, or the like.

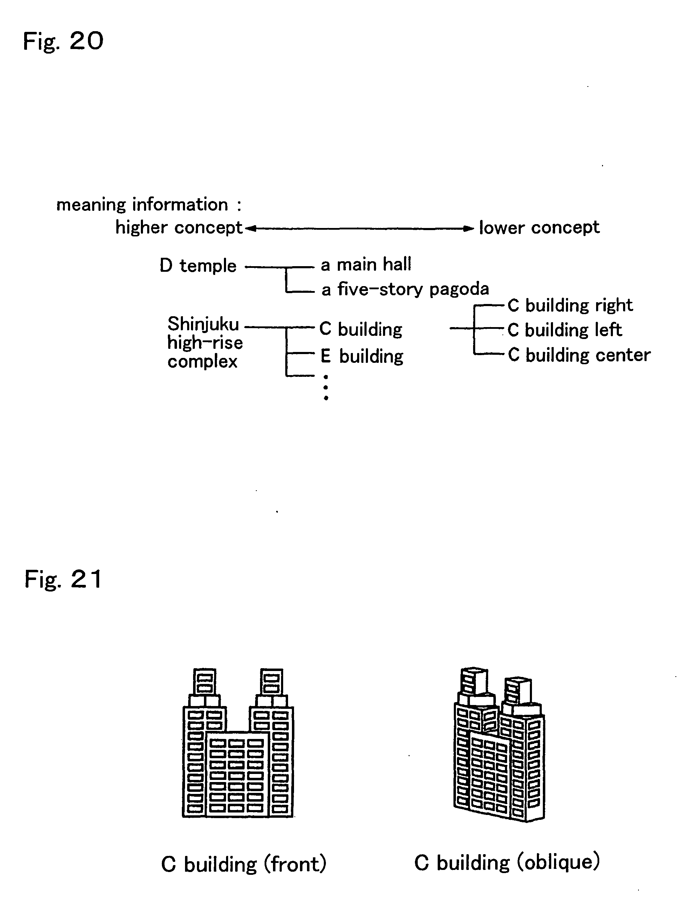

If geographical objects include a plurality of buildings, such as in a temple or the like, as shown in Fig. 19, the visual feature quantity of the entire temple may vary greatly depending on the position from which the temple is viewed. It is therefore preferable to store meaning information of individual buildings (e.g., a main hall and a five-story pagoda) as geographical objects in a hierarchical pattern (e.g., a tree-like pattern) in storage device 2. For example, if there is a concept (common concept) common to a plurality of items of meaning information, then those items of meaning information are stored as meaning information corresponding to a plurality of branches extending from one node of a tree in storage device 2. Common meaning information corresponding to a node of the tree (meaning information representing a common concept of each meaning information) should preferably be stored in storage device 2. If there is a concept common to a plurality of items of common meaning information, then those items of common meaning information are stored as a higher layer of common meaning information corresponding to a plurality of branches extending from one node of a tree in storage device 2. A higher layer of common meaning information corresponding to a node of common meaning information should preferably be stored in storage device 2. Specifically, as shown in Fig. 20, meaning information (e.g., a D temple) of a hierarchical higher concept of a set of geographical objects (e.g., a main hall and a five-story pagoda) is generated in advance. When decision means 32 recognizes geographical objects corresponding to meaning information (e.g., a main hall and a five-story pagoda) corresponding to a lower concept of common meaning information, decision means 32 applies an annotation "D temple" as a higher concept of the set of geographical objects.

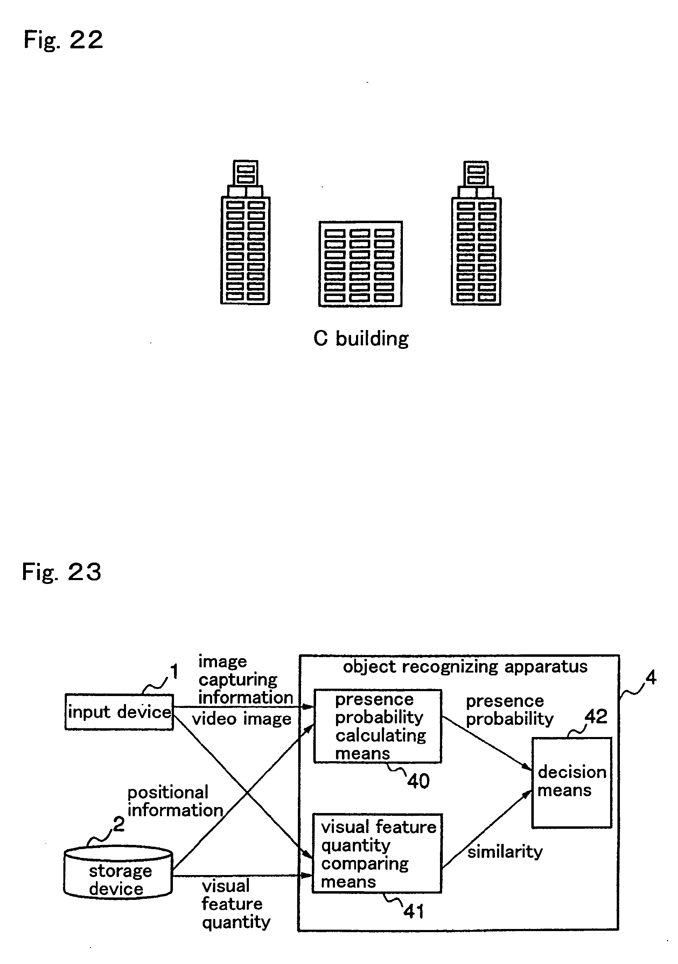

Similarly, the profile of a geographical object such as a C building, for example, as shown in Fig. 21, may vary greatly depending on the direction in which an image of the geographical object is captured. As shown in Fig. 22, such a geographical object may be divided into geographical objects, and the visual feature quantities of the divided geographical objects may be stored in storage device 2. In this case, as shown in Fig. 20, common meaning information (e.g., C building) corresponding to a higher concept of meaning information of the divided geographical objects is stored in storage device 2, and if there is common meaning information (e.g., Shinjuku high-rise complex) corresponding to a higher concept of common meaning information, then that common meaning information is stored in storage device 2. If partial image extracting means 310 extracts parts of the divided geographical objects as individual geographical objects, then decision means 32 determines whether common meaning information corresponding to a higher concept of meaning information (e.g., C building right) is stored in storage device 2 or not. If such common meaning information is stored in storage device 2, then decision means 2 applies an annotation "C building" as a higher concept of the set of the geographical objects.

A video image in which a geographical object is not imaged in its entirety may be input to input device 1 such as when a portion of a geographical object is concealed by an obstacle such as a tree, a person, or the like, or when a portion of a geographical object having a complex shape conceals another major portion thereof. In this case, if a portion of a geographical object is divided into geographical objects, and the visual feature quantities of the divided geographical objects are stored in storage device 2, then partial image extracting means 310 can recognize the geographical object based on the imaged portion thereof and extract a partial video image. It is thus possible to apply an annotation that is more resistant to directional changes of buildings than if a partial video image is extracted without dividing a geographical object.

Not only an entire geographical object, but also a plurality of feature quantities of a geographical object which is partly concealed may additionally or instead be stored in storage device. Not only a geographical object as imaged in one direction, but also a plurality of feature quantities of a geographical object as imaged in various directions or from various positions may additionally or instead be stored in storage device. Using feature quantities captured from a direction closest to the image capturing position or image capturing direction for the input video image, it is possible to handle geographical objects whose visual features vary greatly depending on the direction in which they are viewed.

Steps A6 through A12 described above are repeatedly carried out with respect to all candidate objects (step A13). A video annotation applying apparatus according to the present invention performs the processing in steps A6 through A13 on each frame of a video image input to input device 1. However, if a video image captured by the video input unit has 30 frames per second and a video image input to input device 1 has 3 frames per second, then an annotation is applied to one out of ten frames of the video image captured by the video input unit. In this case, the output of an annotation may be maintained for 1/3 second for thereby applying annotations uninterruptedly to the video image captured by the video input unit.

According to the present embodiment, the visual feature quantity of a partial video image and the visual feature quantities of objects stored in storage device 2 are compared with each other to determine whether the object is captured as a video image or not. If it is judged that the object is captured as a video image, then the object and an annotation are associated with each other. Consequently, an annotation for an object which is not actually captured as a video image is prevented from being associated with a video image. Furthermore, geographical objects whose similarity to a partial video image is to be calculated are narrowed down to those of geographical objects stored in storage device 2 which satisfy the condition as to whether they are present in the area where an image will be captured or not. Therefore, the data processing burden on visual feature quantity comparing means 31 is reduced.

(Second embodiment of the invention)

Fig. 23 is a block diagram of a second embodiment of the present invention. An arrangement of the second embodiment will be described below. The second embodiment of the present invention includes input device 1 for inputting a video image and image capturing information which is information of situations wherein the video image is captured, storage device 2 for storing information of an object which is a video image subject, and object recognizing apparatus 3 for determining whether an object is captured as a video image or not.

Input device 1 and storage device 2 are identical to those of the first embodiment and will not be described below. Object recognizing apparatus 4 comprises an area where an image will be captured estimating means, a matching means, and an presence probability calculating means (presence probability calculating means 40, for example) for calculating an presence probability which is the probability that an image of a geographical object is captured, based on positional information of image capturing information and positional information of the geographical object, a similarity calculating means (visual feature quantity comparing means 41, for example) for calculating the similarity between a visual feature quantity of a geographical object stored in storage device 2 and a visual feature quantity of a video image, in part or wholly, input by input device 1, and decision means 42 for generally evaluating the presence probability and the similarity to determine whether an image of a geographical object is captured or not.

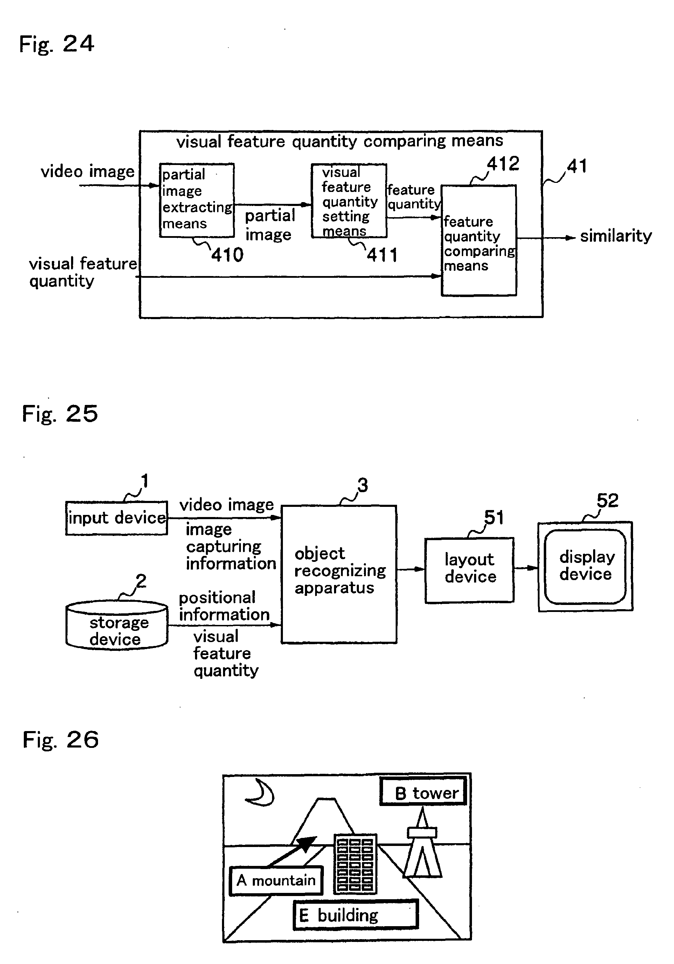

Fig. 24 shows an arrangement of visual feature quantity comparing means 41. The arrangement of visual feature quantity comparing means 41 will be described below. Visual feature quantity comparing means 41 comprises partial image extracting means 410 for extracting a partial video image from a video image input by input device 1, visual feature quantity setting means 411 for setting a visual feature quantity of an extracted partial video image, and feature quantity comparing means 412 for calculating a similarity between the visual feature quantities of geographical objects stored in storage device 2 and a visual feature quantity of a partial video image.

Operation of the present embodiment will be described below. Operation of the present embodiment differs from operation of the first embodiment as to step A5 and step A11 in the flowchart shown in Fig. 5. Other details of operation will not be described below.

According to the first embodiment, in step A5 in the flowchart shown in Fig. 5, candidate object searching means 30 extracts a candidate object. According to the present embodiment, a candidate object is not extracted. Therefore, feature quantity comparing means 412 compares the visual feature quantities of all geographical objects stored in storage device 2 and a visual feature quantity of a partial video image.

According to the first embodiment, in step A11 in the flowchart shown in Fig. 5, the maximum similarity MSmaxi is determined with respect to the predetermined threshold value Thi or not. According to the present embodiment, presence probability calculating means 40 calculates a presence probability Pi which is the probability that an image of each of the geographical objects stored in storage device 1 is captured. Decision means 42 multiplies the presence probability Pi by the reciprocal of the maximum similarity MSmaxi calculated by feature quantity comparing means 412, thereby calculating an integrated score. If the numerical value of the integrated score is greater than a predetermined threshold value, then decision means 42 judges that a geographical object is present in the video image, and reads meaning information of the geographical object from storage device 2. Then, decision means 42 outputs a partial image which contains the geographical object the meaning information of the geographical object read from storage device 2 in association with each other.

In order to determine the presence probability Pi, a probability density distribution representative of a distribution of probabilities that an image of a geographical object is captured is generated in advance with respect to the horizontal distance, the horizontal angle error, and the angle of elevation according to the equations (3). The presence probability is calculated based on the probability density distribution. The probability density distribution is a Gaussian distribution in a graph having a horizontal axis representing the number of pixels and a vertical axis representing the probability. Since a positional error of a geographical object on a video image can be estimated based on the measuring accuracy of a GPS, the accuracy of the angle of the image capturing direction, and the distance from the image capturing position to the geographical object, the probability density distribution is determined by setting the error to a □ value of the Gaussian distribution.

According to the present embodiment, it is determined whether an object is captured as a video image or not based on results produced by comparing the probability that an image of a geographical object is captured, a visual feature quantity of a partial video image, and the visual feature quantities of the objects stored in storage device 2. Therefore, an annotation of an object which is present in the area where an image will be captured, but whose probability of being captured as a video image is low, is prevented from being associated with the video image.

(Third embodiment of the invention)

Fig. 25 is a block diagram of a third embodiment of the present invention. An arrangement of the third embodiment will be described below. The third embodiment of the present invention has an arrangement which is similar to the arrangement of the first embodiment, except for the addition of layout device 51 and display device 52. Those devices of the third embodiment which are identical to those of the first embodiment are denoted by identical reference characters shown in Fig. 1, and will not be described below. A display position determining means is realized by layout device 51.

Layout device 51 determines the display position of an annotation when a video image and an annotation applied to a partial video image extracted from the video image are displayed in superposing relation, and outputs the determined display position to display device 52. Display device 52 superposes the annotation on the video image and displays the annotation at the display position determined by layout device 51.

Fig. 26 shows an example of a video image displayed by display device 51 with annotations superposed on the video image. Layout device 51 determines the display position of an annotation as a position which is immediately below, immediately above, rightward of, or leftward of a partial video image, but which is not superposed on another partial video image. As shown in Fig. 26, if an annotation is displayed at a position spaced from a partial video image beyond a predetermined distance because of the presence of another partial image, then the partial image and the annotation may be interconnected by an arrow.

According to the present embodiment, the position on a video image where an annotation is to be displayed is determined. Consequently, an association between an object and an annotation can be represented by a video image.

(Fourth embodiment of the invention)

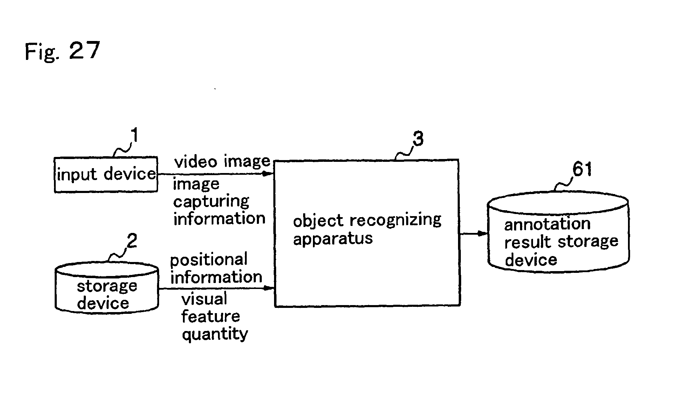

Fig. 27 is a block diagram of a fourth embodiment of the present invention. An arrangement of the fourth embodiment will be described below. The fourth embodiment of the present invention has an arrangement which is similar to the arrangement of the first embodiment, except for the addition of annotation result storage device 61. Those devices of the fourth embodiment which are identical to those of the first embodiment are denoted by identical reference characters shown in Fig. 1, and will not be described below.

Annotation result storage device 61 stores a set of a partial video image and meaning information of a geographical object associated with the partial video image while keeping them associated. Annotation result storage device 61 employs a storage medium such as a memory, a hard disk drive, a CD-ROM, or a DVD-RAM. Annotation result storage device 61 may store information of the position of a partial video image on a video image, and may output a video image that matches a keyword that is input. For example, if the position of a partial video image on a video image can be identified by the numerical values of x and y coordinates and annotation result storage device 61 stores a set of a video image with the B tower on the right side, meaning information (B tower), and information of the position of the partial video image on the video image ((x,y) = (120,240)), then when keywords of "object = B tower" and "area = x < 320" are input, a video image is displayed as described below. It is assumed that the maximum value of x for the entire video image is 640.

First, a set of meaning information "B tower" which matches the condition that the position of the partial video image on the video image is "x < 320" and the area of an object is searched for and identified. Then, the "video image with the B tower on the right side" which is associated with the identified set can be extracted. The user may enter keywords with a keyboard or the like of annotation result storage device 61, or may enter keywords by way of voice through a microphone or the like. The user may have annotation result storage device 61 store its own taste in advance, and annotation result storage device 61 may generate keywords based on the user's taste stored therein.

The present embodiment has an annotation result storage means for storing an annotation and an object contained in video image data in association with each other. Therefore, video image data can be searched for based on an association between the stored annotation and the object contained in the video image data.

(Fifth embodiment of the invention)

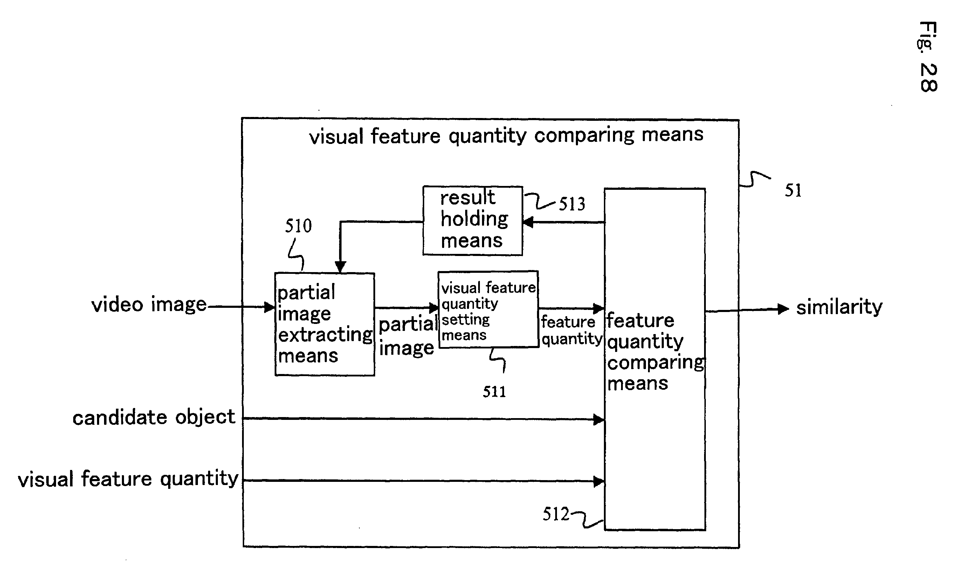

Fig. 28 is a block diagram of a visual feature quantity comparing means according to a fifth embodiment of the present invention. An arrangement of the fifth embodiment will be described below.

The fifth embodiment of the present invention has an arrangement which is similar to the arrangement shown in Fig. 4 of the visual feature quantity comparing means according to the first embodiment, except for the addition of result holding means 513. Result holding means 513 records similarities calculated by feature quantity comparing means 512 and extracts only a partial video image having a high similarity.

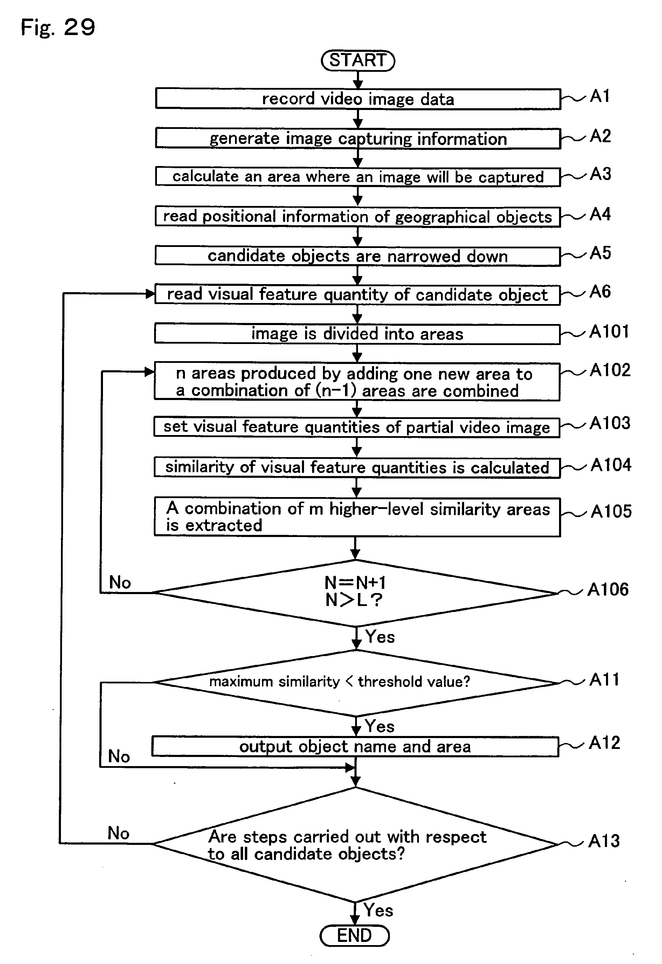

Operation of the present embodiment will be described below. Operation of the present embodiment differs from operation of the first embodiment as to steps 101 through A106 in a flowchart shown in Fig. 29. Other details of operation will not be described below.

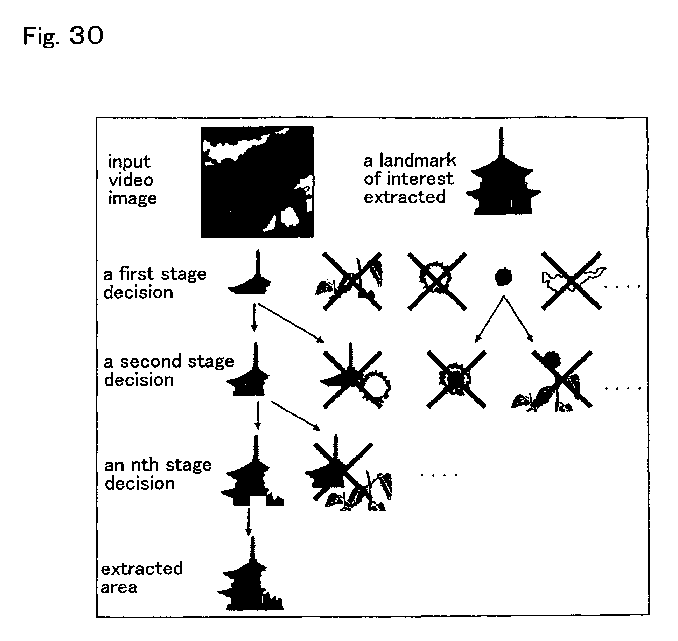

In step A101 in the flowchart shown in Fig. 29, an input video image is divided into areas by way of segmentation. A combination of divided areas are joined into an area. However, since the number of combinations is represented by (2 to the power of the number of areas) - 1, the number of simple combinations increases exponentially as the number b of areas increases. Therefore, a process of evaluating combinations hierarchically and narrowing down combinations is introduced. For example, as shown in Fig. 30, a similarity between one area and a landmark of interest is calculated in a first hierarchical stage, and only m higher-level areas are transferred to a next stage, with combinations of (m+1) and less areas being not evaluated subsequently. In an nth stage, n areas produced by adding one new area to a combination of (n-1) areas extracted in an (n-1)th stage are combined (step A102), a feature quantity is extracted (step A103), a similarity to the landmark of interest is calculated (step A104), and a combination of m higher-level areas is extracted (step A107). The above process is performed up to an Lth (< b) stage (step A106), outputting combined areas having a maximum similarity. In this manner, the number of combinations can be reduced proportionally to a maximum of $a(b(1+m)-m)$. By thus combining visually divided areas, it is possible to extract a landmark area excluding a concealing object which has a visual feature different from the landmark of interest.

When a similarity vector $S_i$ is calculated, a feature quantity may be weighted differently depending on the number of combinatorial stages. For example, if the number of combinatorial stages is small, then since combined areas are considered to be a portion of a landmark of interest, the similarity of a feature quantity (region-based shape descriptor) relative to the shape is weighted by a small coefficient for the calculation of the similarity vector $S_i$, thereby reducing the effect of the similarity on the shape. If the number of combinatorial stages is large, the similarity is weighted by a large coefficient to increase the effect of the shape for thereby effectively narrowing down combinations.

The arrangement of each of the above embodiments of the present invention may be realized on a vehicle guidance system (car navigation system).

The arrangement of each of the above embodiments of the present invention described above does not measure the distance between the image capturing position and the object, but associates the object whose image is captured and the objects stored in the storage device with each other. There is a process of associating the object whose image is captured and the objects stored in the storage device with each other, based on the distance between the image capturing position and the object. The distance between the image capturing position and the object is measured by a stereoscopic process using a plurality of cameras or a process of optically measuring a distance using a laser beam or the like. These processes of measuring distances require a plurality of cameras or an optical distance measuring device, and needs a period of time to measure a distance. Furthermore, these processes are problematic in that it is difficult to distinguish between trees, signboards, etc. near an object and the object based on the distance.

**Claims**

1. A video image object recognizing apparatus comprising:

   input means for inputting video image data and image capturing information which is information for determining an area where an image will be captured;
   storage means for storing positional information which is information representing the position of an object and visual feature information which is information representing a numerical value of a visual feature of the object, that are connected to each other; and
   object recognizing means for recognizing an object contained in a video image based on the input video image data;
   wherein said object recognizing means comprises:

   estimating means for estimating an area where an image will be captured based on the image capturing information;
   matching means for matching the area where an image will be captured to a position represented by the positional information of the object stored in said storage means;
   partial video image extracting means for extracting partial video image data which is either video image data of a partial area of the video image based on the video image data or is video image data of the entire video image, from the input video image;
   visual feature information setting means for generating visual feature information of the partial video image data;
   similarity calculating means for comparing the visual feature information of the partial video image data and the visual feature information of the object stored in said storage means with each other to calculate a similarity therebetween; and
   decision means for determining whether or not an object is present in the video image, based on the input video image data, which is based on the result of matching by said matching means and on the result of the calculated similarity.

2. A video image annotation applying apparatus comprising:

   input means for inputting video image data and image capturing information which is information for determining an area where an image will be captured;
   storage means for storing positional information which is information representing the position of an object, visual feature information which is information representing a numerical value of a visual feature of the object, and additional information which is information added to the object, that are connected to each other; and
   object recognizing means for associating an object contained in a video image based on the input video image data with the additional information;
   wherein said object recognizing means comprises:

   estimating means for estimating an area where an image will be captured based on the image capturing information;
   matching means for matching the area where an image will be captured to a position represented by the positional information of the object stored in said storage means;
   partial video image extracting means for extracting partial video image data which is either video image data of a partial area of the video image based on the video image data or is video image data of the entire video image, from the input video image;
   visual feature information setting means for generating visual feature information of the partial video image data;
   similarity calculating means for comparing the visual feature information of the partial video image data and the visual feature information of the object stored in said storage means with each other to calculate a similarity therebetween; and
   decision means for identifying an object which is contained in the video image based on the input video image data, and which is based on the result of the matching by said matching means and the calculated similarity, and for associating the identified object and the additional information stored in said storage means with each other.

3. The video image annotation applying apparatus according to claim 2, wherein said object recognizing means includes:

> presence probability calculating means for calculating an presence probability which is the probability that an object is contained in the video image, based on the area where an image will be captured and the positional information of the object stored in the storage means; and
> wherein said decision means identifies an object which is contained in the video image based on the calculated presence probability and similarity, and associates the identified object and the additional information stored in said storage means with each other.

4. The video image annotation applying apparatus according to claim 3, wherein said partial video image extracting means identifies a range within which the object is positioned in the video image based on the positional information of the object stored in the storage means, and extracts partial video image data from the identified range.

5. The video image annotation applying apparatus according to claim 2, wherein said object recognizing means includes:

> candidate object searching means for extracting a candidate object, which is an object present in the area where an image will be captured, based on the area where an image will be captured and the positional information; and
> wherein said similarity calculating means compares the visual feature information of the partial video image data and the visual feature information of a candidate object stored in said storage means with each other to calculate a similarity therebetween.

6. The video image annotation applying apparatus according to claim 5, wherein said partial video image extracting means identifies a range within which the object is positioned in the video image based on the positional information of the candidate object stored in the storage means, and extracts partial video image data from the identified range.

7. The video image annotation applying apparatus according to claim 2, further comprising:

> display means for displaying a video image; and
> display position determining means for indicating a position to display the additional information associated with the object contained in the video image and for displaying the additional information that is superimposed on the video image.

8. The video image annotation applying apparatus according to claim 2, further comprising:

> annotation result storage means for storing the additional information and the object contained in the video image in association with each other.

9. The video image annotation applying apparatus according to claim 2, wherein said partial video image extracting means has a function to arbitrarily change the shape and size of the area of a video image based on the extracted partial video image data.

10. The video image annotation applying apparatus according to claim 2, wherein said partial video image extracting means extracts partial video image data in the area of a video image which matches one or a combination of conditions including luminance information, color information, shape information, texture information, and size information.

11. The video image annotation applying apparatus according to claim 10, wherein if said partial video image extracting means extracts partial video image data from a video image which matches a combination of each condition, then said partial video image extracting means determines an importance of said condition and extracts partial video image data based on the result of the matching by said matching means and the visual feature information of the object stored in the storage means.

12. The video image annotation applying apparatus according to claim 2, wherein the visual feature information of the object stored in the storage means comprises a template video image which is a video image having a visual feature similar to the object.

13. The video image annotation applying apparatus according to claim 2, wherein the visual feature information of the object stored in the storage means comprises one or more items of color information, shape information, texture information, and size information, and the visual feature information of the partial video image data generated by said visual feature information setting means comprises one or more items of color information, shape information, texture information, and size information.

**14.** The video image annotation applying apparatus according to claim 2, wherein the positional information of the object stored in said storage means comprises information for identifying the position of one of the vertexes, a central point, or a center of gravity of a three-dimensional shape which approximates a three-dimensional shape of solid geometry including a cone, a cylinder, a cube, or the like which is similar to the object.

**15.** The video image annotation applying apparatus according to claim 2, wherein the positional information of the object stored in said storage means comprises information for identifying the position of at least one of the vertexes of a three-dimensional shape which approximates the object having polygonal surfaces.

**16.** The video image annotation applying apparatus according to claim 2, wherein the positional information of the object stored in said storage means comprises information for identifying the position of a vertex which is highest of all the vertexes of the object.

**17.** The video image annotation applying apparatus according to claim 2, wherein the positional information of the object stored in said storage means comprises information for identifying the position of the object according to a latitude, a longitude, and an altitude.

**18.** The video image annotation applying apparatus according to claim 2, wherein said storage means stores in a hierarchical pattern common additional information based on a concept common to additional information associated respectively with a plurality of objects or stores common additional information based on a concept common to a plurality of items of common additional information, and said decision means determines whether there is common additional information corresponding to additional information or common additional information of an object whose image is captured, and, if there is such common additional information, associates the object with the common additional information.

**19.** The video image annotation applying apparatus according to claim 2, wherein said image capturing information includes captured date and time information which is information for identifying a captured date and time, said storage means stores visual feature information depending on the captured date and time, and said similarity calculating means compares the visual feature information of the partial video image data and the visual feature information depending on the captured date and time identified by the captured date and time information with each other to calculate a similarity therebetween.

**20.** The video image annotation applying apparatus according to claim 10, wherein said partial video image extracting means divides areas from said input video image data and extracts the divided areas as said partial video image data.

**21.** The video image annotation applying apparatus according to claim 20, wherein said partial video image extracting means combines the divided areas into said partial video image data.

**22.** The video image annotation applying apparatus according to claim 21, wherein said partial video image extracting means generates the partial video image data by hierarchically evaluating a combination of said divided areas.

**23.** The video image annotation applying apparatus according to claim 22, wherein said partial video image extracting means uses only a number of areas whose similarity is high for subsequent combination from the combination of areas in hierarchically evaluating the combination of said divided areas.

**24.** The video image annotation applying apparatus according to claim 2, wherein a plurality of items of visual information of the object as viewed, in part or wholly, in one direction or a plurality of directions are held as the visual feature information of the object stored in said storage means.

**25.** A vehicle guidance system adapted to be mounted on a vehicle for displaying a position of its own on a map displayed by a display device based on a GPS, comprising the video image annotation applying apparatus according to claim 2.

**26.** A method of recognizing a video image object, comprising the steps of:

inputting video image data and image capturing information which is information for determining an area where an image will be captured;

storing positional information which is information representing the position of an object and visual feature information which is information representing a numerical value of a visual feature of the object, in association with each other;

estimating the area where an image will be captured based on the image capturing information;

matching the area where an image will be captured to a position represented by the positional information of the object which is stored;

extracting partial video image data which is either video image data of a partial area of the video image based on the video image data or is video image data of the entire video image, from the input video image;

generating visual feature information of the partial video image data;

comparing the visual feature information of the partial video image data and the stored visual feature information of the object to calculate a similarity therebetween; and

determining whether an image of an object is captured or not, based on the result of the matching and the calculated similarity.

27. A method of applying an video image annotation, comprising the steps of:

inputting video image data and image capturing information which is information for determining an area where an image will be captured;

storing positional information which is information representing the position of an object, visual feature information which is information representing a numerical value of a visual feature of the object, and additional information which is information added to the object, in association with each other;

estimating the area where an image will be captured based on the image capturing information;

matching the area where an image will be captured to a position represented by the positional information of the object which is stored;

extracting partial video image data which is either video image data of a partial area of the video image based on the video image data or is video image data of the entire video image, from the input video image;

generating visual feature information of the partial video image data;

comparing the visual feature information of the partial video image data and the stored visual feature information of the object to calculate a similarity therebetween; and

identifying an object which is contained in the video image, based on the result of the matching and the calculated similarity, and associating the identified object and the stored additional information with each other.

28. A video image object recognizing program adapted to be installed in a video image object recognizing apparatus for determining whether an object which is stored is contained as a subject in video image data or not, said video image object recognizing program to enable a computer to perform a process comprising the steps of:

storing, in a storage device, positional information which is information representing the position of an object and visual feature information which is information representing a numerical value of a visual feature of the object, in association with each other;

estimating an area where an image will be captured based on image capturing information which is information for determining the area where an image will be captured;

matching the area where an image will be captured to a position represented by the positional information of the object which is stored in said storage device;

extracting partial video image data which is either video image data of a partial area of the video image based on the video image data or is video image data of the entire video image, from input video image;

generating visual feature information of the partial video image data;

comparing the visual feature information of the partial video image data and the stored visual feature information of the object to calculate a similarity therebetween; and

determining whether an image of an object is captured or not, based on the result of matching and calculated similarity.

29. A video image annotation applying program adapted to be installed in a video image annotation applying apparatus for associating an object and information of an object which is stored with each other, said video image annotation applying program enabling a computer to perform a process comprising the steps of:

storing, in a storage device, positional information which is information representing the position of an object, visual feature information which is information representing a numerical value of a visual feature of the object, and additional information which is information added to the object, in association with each other;

estimating an area where an image will be captured based on image capturing information which is information for determining the area where an image will be captured;

matching the area where an image will be captured to a position represented by the positional information of the object which is stored in said storage device;

extracting partial video image data which is either video image data of a partial area of the video image based on the video image data or is video image data of the entire video image, from input video image;

generating visual feature information of the partial video image data;

comparing the visual feature information of the partial video image data and the visual feature information of the object which is stored with each other to calculate a similarity therebetween; and

identifying an object which is contained in the video image, based on the result of matching and calculated similarity, and associating the identified object and the additional information which is stored with each other.

Fig. 1

| meaning information | positional information | visual feature quantity |
|---|---|---|
| A mountain | (E138° 44' 02.03" , N35° 21' 34.35" , 3776m) , | (△ white blue etc.) |
| B tower | (E139° 44' 55.38" , N35° 39' 18.59" , 333m) , | (△ red white etc.) |
| C building | (E139° 45' 04.39" , N35° 38' 46.16" , 180m) , | (△ gray etc.) |

Fig. 2

Fig. 3

Fig. 4

## Fig. 5

START

| record video image data | ~A1 |

| generate image capturing information | ~A2 |

| calculate an area where an image will be captured | ~A3 |

| read positional information of geographical objects | ~A4 |

| candidate objects are narrowed down | ~A5 |

| read visual feature quantity of candidate object | ~A6 |

| extract partial video image | ~A7 |

| set visual feature quantities of partial video image | ~A8 |

| similarity of visual feature quantities is calculated | ~A9 |

**No** — Is similarity calculated in its entirety? ~A10

↓ Yes

**No** — maximum similarity < threshold value? ~A11

↓ Yes

| output object name and area | ~A12 |

**No** — Are steps carried out with respect to all candidate objects? ~A13

↓ Yes

END

## Fig. 6

image capturing position C
$(C_1, C_2, C_3)$

Su

an area where an image will be captured

image capturing direction $\theta$

Z

Sd

ground plane Se

## Fig. 7

image capturing position C
$(C_1, C_2, C_3)$

Sl

an area where an image will be captured

image capturing direction $\theta$

Sr

Fig. 8

image capturing position C
$(C_1, C_2, C_3)$

UL
Su
UR
Sl
image capturing direction $\theta$
focal distance
imaging device
Sr
DL
Sd
DR

Fig. 9

angle
position of candidate object
$O(O_{i1}, O_{i2}, O_{i3})$
horizontal distance Dist
image capturing position
$(C_1, C_2, C_3)$

Fig. 10

Fig. 11

block

Fig. 12

SI

image capturing position C
($C_1$,$C_2$,$C_3$)

an area where an image will
be captured

image capturing direction $\theta$

● position of candidate object

$O(O_{i1},O_{i2},O_{i3})$

Sr

Fig. 13

block

Fig. 14

original image

dividing areas

Fig. 15

divided areas

joining areas

Fig. 16

Fig. 17

result of dividing areas

Fig. 18

candidate object

$O_{c1}$

$O_{c2}$

$O_{cM}$

calculate similarity
based on visual
feature quantity

searching
area

Fig. 19

D temple

D temple

## Fig. 20

meaning information :
higher concept ◄────────────────► lower concept

D temple ─────┬── a main hall
              └── a five-story pagoda

Shinjuku ─────┬── C building ────┬── C building right
high-rise     │                  ├── C building left
complex       ├── E building     └── C building center
              ┆

## Fig. 21

C building (front)          C building (oblique)

Fig. 22

C building

Fig. 23

Fig. 24

**visual feature quantity comparing means**

video image → partial image extracting means `410` → partial image → visual feature quantity setting means `411` → feature quantity → feature quantity comparing means `412` → similarity

visual feature quantity → feature quantity comparing means

`41`

Fig. 25

input device `1` → video image / image capturing information → object recognizing apparatus `3` → layout device `51` → display device `52`

storage device `2` → positional information / visual feature quantity → object recognizing apparatus

Fig. 26

B tower

A mountain

E building

Fig. 27

Fig. 28

EP 1 622 081 A1

visual feature quantity comparing means

result holding means ~513

510

video image → partial image extracting means → partial image → visual feature quantity setting means → feature quantity → feature quantity comparing means → similarity

511

candidate object

visual feature quantity

512

51

34

Fig. 29

```
                        ┌──────────┐
                        │  START   │
                        └────┬─────┘
                             ▼
        ┌────────────────────────────────────────┐
        │         record video image data        │─── A1
        └────────────────────┬───────────────────┘
                             ▼
        ┌────────────────────────────────────────┐
        │     generate image capturing information │─── A2
        └────────────────────┬───────────────────┘
                             ▼
        ┌────────────────────────────────────────┐
        │  calculate an area where an image will be captured │─── A3
        └────────────────────┬───────────────────┘
                             ▼
        ┌────────────────────────────────────────┐
        │ read positional information of geographical objects │─── A4
        └────────────────────┬───────────────────┘
                             ▼
        ┌────────────────────────────────────────┐
        │     candidate objects are narrowed down │─── A5
        └────────────────────┬───────────────────┘
                             ▼
        ┌────────────────────────────────────────┐
        │  read visual feature quantity of candidate object │─── A6
        └────────────────────┬───────────────────┘
                             ▼
        ┌────────────────────────────────────────┐
        │         image is divided into areas     │─── A101
        └────────────────────┬───────────────────┘
                             ▼
        ┌────────────────────────────────────────┐
        │ n areas produced by adding one new area to │─── A102
        │ a combination of (n-1) areas are combined │
        └────────────────────┬───────────────────┘
                             ▼
        ┌────────────────────────────────────────┐
        │ set visual feature quantities of partial video image │─── A103
        └────────────────────┬───────────────────┘
                             ▼
        ┌────────────────────────────────────────┐
        │ similarity of visual feature quantities is calculated │─── A104
        └────────────────────┬───────────────────┘
                             ▼
        ┌────────────────────────────────────────┐
        │ A combination of m higher-level similarity areas │─── A105
        │ is extracted                             │
        └────────────────────┬───────────────────┘
                             ▼
   No              ╱  N=N+1        ╲
   ◄───────────────   N>L?          ─── A106
                     ╲             ╱
                             │Yes
                             ▼
             ╱ maximum similarity < threshold value? ╲─── A11
             ╲                                      ╱
                             │Yes
                             ▼
        ┌────────────────────────────────────────┐
   No   │       output object name and area       │─── A12
        └────────────────────┬───────────────────┘
                             ▼
             ╱ Are steps carried out with respect ╲
   No        ╲ to all candidate objects?          ╱─── A13
                             │Yes
                             ▼
                        ┌──────────┐
                        │   END    │
                        └──────────┘
```

Fig. 30

## INTERNATIONAL SEARCH REPORT

| International application No. |
| --- |
| PCT/JP2004/005372 |

**A.    CLASSIFICATION OF SUBJECT MATTER**
Int.Cl⁷   G06T7/00

According to International Patent Classification (IPC) or to both national classification and IPC

**B.    FIELDS SEARCHED**

Minimum documentation searched (classification system followed by classification symbols)
Int.Cl⁷   G06T7/00-7/60

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X<br><br>Y | JP 10-267671 A   (Nippon Telegraph And Telephone Corp.),<br>09 October, 1998 (09.10.98),<br>Full text; all drawings<br>& EP 1306648 A2        & US 6222583 B1<br>& CN 1203369 A | 1,2,4-17,<br>19,20,25-29<br>3,18,21-24 |
| Y | JP 11-86035 A   (Nippon Telegraph And Telephone Corp.),<br>30 March, 1999 (30.03.99),<br>Full text; all drawings<br>& EP 1306648 A2        & US 6222583 B1<br>& CN 1203369 A | 3,23 |

| ☒  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 May, 2004 (19.05.04) | Date of mailing of the international search report<br>01 June, 2004 (01.06.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

37

**INTERNATIONAL SEARCH REPORT**

| International application No. |
|---|
| PCT/JP2004/005372 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-229382 A   (Nippon Telegraph And Telephone Corp.),<br>24 August, 2001 (24.08.01),<br>Par. No. [0030]; Fig. 3<br>(Family: none) | 18 |
| Y | JP 61-262986 A   (Fujitsu Ltd.),<br>20 November, 1986 (20.11.86),<br>Full text; all drawings<br>(Family: none) | 21-24 |

Form PCT/ISA/210 (continuation of second sheet) (January 2004)